# EUROPEAN PATENT SPECIFICATION

(11) **EP 0 517 169 B1**
(45) Date of publication and mention of the grant of the patent: **17.11.1994**
(21) Application number: 92109309.2
(22) Date of filing: 02.06.1992
(51) Int. Cl.: C01B 9/08, C03C 1/02, C03C 3/32

(54) **Method of and apparatus for fluoride glass fabrication**
Verfahren und Vorrichtung zur Fluoridglasherstellung
Procédé et appareil pour la fabrication de verre fluoré

(30) Priority: 05.06.1991 IT TO910423
(43) Date of publication of application: 09.12.1992
(73) Proprietor: PIRELLI CAVI S.p.A., 20123 Milano (IT); SIP SOCIETA ITALIANA PER l'ESERCIZIO DELLE TELECOMUNICAZIONI P.A., 10122 Torino (IT); SIRTI S.p.A., I-20124 Milano (IT)
(72) Inventor: Braglia, Marco, Torino (IT); Cocito, Giuseppe, S. Giusto Can.se (TO) (IT)
(74) Representative: Riederer Freiherr von Paar zu Schönau, Anton

(56) References cited:
- EP-A- 0 451 866
- GB-A- 2 164 033
- US-A- 4 872 894
- US-A- 4 885 019
- MATERIALS RESEARCH BULLETIN. vol. 25, no. 7, 1990, OXFORD GB pages 891 - 897 M. FERRARIS ET AL 'Different processes for the preparation of fluorozirconate glasses.'
- JOURNAL OF LIGHTWAVE TECHNOLOGY vol. LT-4, no. 1, January 1986, NEW YORK USpages 87 - 89 T. NAKAI ET AL 'Dehydration of Fluoride Glasses by NF3Processing.'
- PATENT ABSTRACTS OF JAPAN vol. 11, no. 193 (C-430)20 June 1987
- PATENT ABSTRACTS OF JAPAN vol. 11, no. 193 (C-430)20 June 1987

## Description

The present invention concerns production of fluoride glasses for optical fibres for telecommunications, and more particularly it relates to a method of and an apparatus for fabricating such glasses by using an NF₃-based reactive atmosphere.

As known, in one of the most widely used methods of preparing fluoride glasses, and more particularly heavy-metal fluoride glasses, such as fluorozirconate glasses, a mixture of suitable starting products (oxides or fluorides of the concerned elements) is melted in a suitable reactor into which the reactants required for fluorination and/or purification of the starting products are introduced. The reactants are to be selected so as to prevent oxides, oxyfluorides or hydrated compounds from becoming formed in the glass, since such substances negatively affect optical quality and mechanical properties of the glass, especially if the glass is to be used for producing optical fibres for telecommunications. Indeed, such substances contribute, i. a., to increase fibre attenuation. Especially ZrF₄, which is the main constituent of a fluorozirconate glass, exhibits a high tendency to form oxides or hydrated compounds, and therefore the use of NF₃ as fluorinating and/or purifying agent has been suggested, since it allows fluorides to be heated without giving rise to oxides and oxyfluorides and reduces fluorinating process duration.

The paper "Different processes for the preparation of fluorozirconate glasses" by M. Ferraris, M. Braglia, R. Chiappetta, E. Modone, G. Cocito, Materials Research Bulletin, Vol. 25, 1990, pages 891 - 897, discloses preparation of fluorozirconate glasses by using NF₃ as fluorinating and purifying agent. Typical reactions occurring during the melting process (considering only Zr, and not the other glass constituents, i. e. Ba, La, Al, Na, whose compounds are generally more stable and less affected by impurities), are:

3ZrF₄.H₂O + 2NF₃ --> 3ZrF₄ + NO + NO₂ + 6HF (1)

3ZrO₂ + 4NF₃ --> 3ZrF₄ + 2NO + NO₂ (2)

Nitrogen oxides are highly undesirable reaction by-products, as they readily tend to oxidise again the fluoride formed. This applies especially to NO₂ which, at the temperatures existing during the synthesis process (280 - 850°C), decomposes into NO and O₂. Nitrogen oxides are therefore to be timely eliminated from the reaction ambient. A solution to that problem could be to continuously renew NF₃, immediately above the region where ZrF₄ is present, so as to mechanically remove NO and O₂. That way of operating has a serious disadvantage, in that NF₃ is a very toxic compound and hence serious problems would arise for abating the reactant which has not taken part, into the reaction. Moreover, the mere mechanical removal through the flow of NF₃ does not ensure the complete elimination of the undesirable by-products. To obviate the above disadvantages, a method and an apparatus are provided that allow such a complete removal without leaving toxic compounds, difficult to be eliminated, in the reaction ambient.

According to the invention, there is provided a method including a step in which the starting products are fluorinated and purified by reacting same with NF₃, followed by a step in which such products are melted to form the glass, wherein at least during the fluorination and purification step activated nitrogen is introduced into the atmosphere of the region where said reaction with NF₃ takes place and is reacted with nitrogen oxides developed during the reaction in order to eliminate same, and wherein a porous body of Zr is placed in such a reaction region to adsorb O₂ developed during the reactions between the nitrogen oxides and activated nitrogen and during the fluorination and purification reactions.

At the temperatures existing in the reaction region during the fluorination and melting steps, activated nitrogen reacts with NO yielding N₂ and O₂ the porous Zr body adsorbs oxygen without forming substances affecting the quality of the produced glass.

The invention provides also an apparatus for performing the method, comprising a reactor with a crucible for containing the starting products and a duct for bringing the fluorinating agent close to such products, and further comprising a duct connected on the one side to a nitrogen source, penetrating into the reactor, ending near the crucible mouth and associated with means for nitrogen activation, and a porous body of Zr placed near the crucible in order to adsorb oxygen developed during the reactions between the starting products and NF₃ and between activated nitrogen and nitrogen oxides.

The invention will be better understood with reference to the accompanying drawing, in which:
- Fig. 1 is a diagrammatic cross-sectional view of an apparatus for performing the invention, and
- Fig. 2 is a diagram of the working temperature versus time, for the production of an exemplary glass.

In the drawing, a reactor 1 contains a crucible 2 for containing a mixture 3 of starting products (oxides or fluorides) for fluoride glass fabrication.

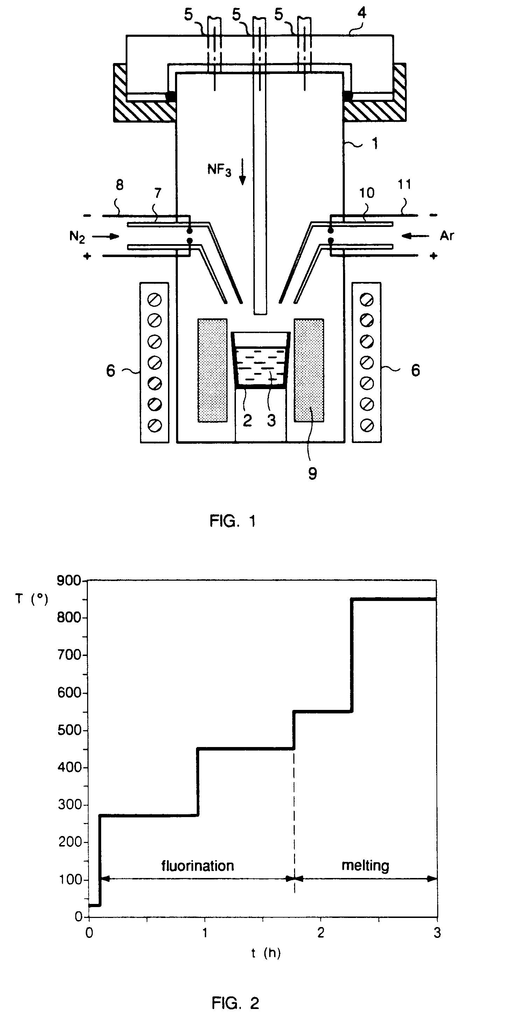

The reactor is closed by a cover 4 through which ducts 5 pass intended to introduce the fluorinating agent (NF₃) and to exhaust the gaseous reaction products. Reactor 1, crucible 2, cover 4 and ducts 5 are made of the materials commonly used to this aim in fluoride glass production apparatuses. Reactor 1 is associated with conventional heating means, suitable for carrying out the temperature schedules required for producing the different glasses by using NF₃ as fluorinating agent. An exemplary temperature schedule is found in the above mentioned paper by M. Ferrais et al for a fluorozirconate glass comprising 53% ZrF₄, 20% BaF₂, 4% LaF₃, 3% AlF₃, 20% NaF (molar percentages), obtained from a mixture of the corresponding fluorides. In order to make understanding of the description easier, such a schedule is shown in Fig. 2.

A further duct 7 penetrating into reactor 1 brings in correspondence with the reaction region activated (i. e. ionised) nitrogen intended to react with nitrogen oxides, which are undesired by-products of the starting product fluorination and purification reactions, in order to remove such oxides. Nitrogen activation is obtained e.g. through electric discharge between electrodes 8 preferably arranged in the portion of duct 7 located within reactor 1, near the duct end. Thus, activated nitrogen is prevented from completely going back to molecular state before interaction with the nitrogen oxides to be eliminated. Suitable voltages for nitrogen activation are of the order of a few Kvolt/mm. As an alternative, nitrogen activation can be obtained through high-frequency discharge. Suitable frequencies are such as used in plasma generation, e. g. frequencies of the order of some MHz (or GHz, in case microwaves are used). Induction techniques can also be used, at the same frequencies as in case of discharge. Flow rates of activated nitrogen will depend on reactor volume and can range from some hundredths of such volume per second to a value corresponding to said volume; preferably, a flow rate of the order of one tenth of the volume per second can be used.

Moreover, a body 9 of Zr is provided in the reactor region where crucible 2 is located; said body serves as a trap for O₂ developed due to dissociation of NO₂ and to the reactions leading to nitrogen oxide elimination, which reactions will be disclosed in greater details hereinafter. Body 9 can be a Zr sponge sleeve surrounding crucible 2, as shown in the drawing, a Zr powder bed, etc.

Body 9, in the form of a cylindrical sleeve, constitutes a screen absorbing thermal radiation from heating element 6 and emitting again part of such a radiation towards the internal crucible. This must be taken into account when designing the reactor. It is also to be appreciated that, independently of the temperature schedule required for glass synthesis, it is necessary to maintain body 9 at a certain temperature, whatever the body structure, to obtain the desired oxygen trap action, as will be explained later. More particularly, if body 9 is a spongy cylindrical sleeve, induction heating may be used, heating means 6 forming the inductor. The use of separate heating means, associated with crucible 2 and body 9 respectively, might also be suitable.

Body 9 could also be a spongy Zr disc, which may be located within the crucible near the surface of the glass becoming formed. Also in this case, either conventional heating (e.g. resistance heating) or induction heating can be used.

A further duct 10 can be provided to bring to the reaction region also activated Ar, intended to increase the effectiveness of the activated nitrogen action. Argon activation can be obtained in the same manner as nitrogen activation, and to this aim the drawing shows an electrode pair 11, it too located in the duct portion within the reactor and close to the duct end. Argon ionization voltages or frequencies are similar to those used for nitrogen ionization. Argon flow rates can be a fraction, e. g. one quarter, of nitrogen flow rates.

For sake of simplicity, the sources of the different gaseous products introduced into reactor 1, the devices for monitoring and controlling the flow of said products and the electrical supply for the gas activating means are not shown in the drawing, since such devices are wholly conventional and are not part of the invention.

The execution of the process according to the invention will now be described with reference to the exemplary glass mentioned hereinbefore. The starting products in powder form contained in crucible 2 are heated first to a temperature between 400 and 500°C, in the presence of an NF₃ flow at a pressure slightly higher than atmospheric pressure, in order to cause fluoride dehydration and oxide fluorination according to reactions (1), (2) and to the corresponding reactions for the other glass constituents. The overall duration of `such fluorination step can be clearly seen in the diagram of Fig. 2. As said, such reactions result in development of NO and NO₂; the latter, at the temperatures considered, decomposes into NO and O₂. During the whole fluorination step, activated nitrogen N* is introduced via duct 8 and reacts with NO according to reaction:

2NO + N₂* --> 2N₂ + O₂ (3)

the efficiency of which is increased by introducing activated Ar, as said before. As reaction (3) proceeds, the ambient within reactor 1, near crucible 2, will tend to contain only N₂, O₂, HF (resulting from reaction (1)) and possibly NF₃ which has not reacted. It is to be appreciated that removal of NO from the ambient by reaction (3) accelerates decomposition of NO₂, promoting development of O₂. The presence of N₂ and HF does not cause problems to the glass. O₂ produced by reaction (3) and by NO₂ decomposition is adsorbed by Zr body 9, so that the atmosphere in reactor 1 no longer comprises noxious reaction by-products. As known, O₂ easily reacts with Zr, with a reaction speed depending on the temperature, the purity, the metal surface particle size. More particularly, Zr begins adsorbing oxygen at a temperature near 180°C and the reaction takes place at increasing speed in the temperature range from 450°C to 800°C. Yet it is to be reminded that, in case of high O₂ concentration, a passivated ZrO₂ layer could become formed at temperatures between 180°C and 450°C, which layer could prevent the reaction from continuing.

It is therefore more suitable to keep body 9 at temperatures above 450°C, where the oxide layer decomposes thus providing a fresh Zr surface and making further absorption easier.

Once the fluorinating step is over, the crucible temperature is brought to the values required for powder melting. The temperatures are first between 500 and 600°C, and then higher than 850°C. An inert atmosphere of N₂ is maintained in reactor 1 during melting, still in presence of NF₃ flow to ensure completion of reactions (1) and (2). Also the flow of activated nitrogen (and activated argon, if any) is maintained to eliminate NO which has remained at the end of the preceding step or has developed during the melting step. O₂ remained or developed during the present step is still being adsorbed by body 9, still kept at a temperature higher than 450°C by heating means 6 or by its own heating means. It is also to be appreciated that a possible attack of Zr by HF present in the reactor atmosphere produces ZrF₄ which is one of the glass constituents, and hence such an attack has no negative effect. It is self evident that the above description is given only by way of non limiting example, and that changes and modifications are possible without departing from the scope of the invention.

## Claims

1. A method of manufacturing fluoride glasses, including a step in which the starting products are fluorinated and purified by reacting same with NF₃, followed by a step in which such products are melted to form the glass, characterized in that, at least during the fluorination and purification step, activated nitrogen is introduced into the atmosphere of the region where said reaction with NF₃ takes place and is made to react with nitrogen oxides developed during said reaction in order to eliminate same, and in that a porous body of Zr is placed in such a reaction region to adsorb O₂ developed during the reactions between the nitrogen oxides and activated nitrogen and during the fluorination and purification reactions.

2. A method according to claim 1, characterized in that said flow of activated nitrogen is maintained also during the melting step.

3. A method according to claim 1 or 2, characterized in that activated argon is also introduced into the reaction region.

4. A method according to any preceding claim, characterized in that the nitrogen and argon activation is obtained by means of electrical discharge between electrodes, high frequency discharge, or induction.

5. A method according to any of claims 1 to 4, characterized in that activation of nitrogen and argon is carried out in a region close to the reaction region.

6. Apparatus for manufacturing fluoride glasses by using NF₃ as fluorinating agent, comprising a reactor (1, 4) with a crucible (2) for containing the starting products (3) and a duct (5) for bringing the fluorinating agent close to such products, characterized in that it further comprises a duct (7) connected on the one side to a source of nitrogen, said duct penetrating into the reactor (1), ending in proximity of the region where the reaction between the starting products and the fluorinating agent takes place, near the mouth of the crucible (2), and being associated with means (8) for nitrogen activation, and a porous body (9) of Zr placed near said reaction region in order to adsorb oxygen developed during the reactions between the starting products and NF₃ and between activated nitrogen and nitrogen oxides.

7. Apparatus according to claim 6, characterized in that it further comprises a duct (10) connected on the one side to a source of argon, said duct penetrating into the reactor (1), ending in proximity of the region where the reaction between the starting products and the fluorinating agent takes place and being associated with means (11) for argon activation.

8. Apparatus according to claim 6 or 7, characterized in that the activation means (8, 11) are arranged in a portion of the respective duct (7, 10) located within the reactor and close to the duct end.

9. Apparatus according to any of claims 6 to 8, characterized in that the porous Zr body is a bed of Zr powder, a sleeve of Zr sponge surrounding the crucible or a disc of Zr sponge located in the crucible, near the surface of the glass being formed.

10. Apparatus according to any of claims 6 to 9, characterized in that the porous Zr body is associated with own heating means.

## Patentansprüche

1. Verfahren zur Fluoridglasherstellung, einschließlich eines Schritts, bei dem die Ausgangsprodukte durch ihre Reaktion mit NF₃ fluoriert und gereinigt werden, gefolgt von einem Schritt, bei dem diese Produkte geschmolzen werden, um das Glas zu bilden, dadurch gekennzeichnet, daß man wenigstens während des Schritts der Fluorierung und Reinigung aktivierten Stickstoff in die Atomsphäre des Bereichs einführt, in dem die Reaktion mit dem NF₃ stattfindet, und man ihn mit Stickoxiden reagieren läßt, die während jener Reaktion entstanden sind, um diese zu eliminieren, und daß man einen porösen Körper aus Zr in diesem Reaktionsbereich anordnet, um O₂ zu absorbieren, der während der Reaktionen zwischen den Stickoxiden und dem aktivierten Stickstoff und während der Reaktionen des Fluorierens und Reinigens entstanden ist.

2. Verfahren nach Anspruch 1, dadurch gekennzeichnet, daß man den Fluß des aktivierten Stickstoffs auch während des Schritts des Schmelzens aufrechterhält.

3. Verfahren nach Anspruch 1 oder 2, dadurch gekennzeichnet, daß man in den Reaktionsbereich auch aktiviertes Argon einführt.

4. Verfahren nach einem der vorhergehenden Ansprüche, dadurch gekennzeichnet, daß man die Aktivierung des Stickstoffs und des Argons mit Hilfe einer elektrischen Entladung zwischen Elektroden, einer Hochfrequenzentlandung oder einer Induktion erhält.

5. Verfahren nach einem der Ansprüche 1 bis 4, dadurch gekennzeichnet, daß man die Aktivierung des Stickstoffs und des Argons in einem Bereich nahe dem Reaktionsbereich durchführt.

6. Vorrichtung zur Fluoridglasherstellung unter Verwendung von NF₃ als Fluorierungsmittel, umfassend einen Reaktor (1, 4) mit einem Schmelztiegel (2) zur Aufnahme der Ausgangsprodukte (3) und eine Leitung (5) zum Heranbringen des Fluorierungsmittels nahe an diese Produkte, dadurch gekennzeichnet, daß sie weiterhin umfaßt: eine Leitung (7), die auf der einen Seite mit einer Stickstoffquelle verbunden ist und die in den Reaktor (1) reicht und in der Nähe des Bereichs endet, in dem die Reaktion zwischen den Ausgangsprodukten und dem Fluorierungsmittel stattfindet, nahe der offenen Seite des Schmelztiegels (2), und der eine Einrichtung (8) zur Stickstoffaktivierung zugeordnet ist; und einen porösen Körper (9) aus Zr, der zum Absorbieren von Sauerstoff, der während der Reaktionen zwischen den Ausgangsprodukte und dem NF₃ und zwischen dem aktivierten Stickstoff und den Stickoxiden entsteht, nahe dem Reaktionsbereich angeordnet ist.

7. Vorrichtung nach Anspruch 6, dadurch gekennzeichnet, daß sie weiterhin eine Leitung (10) umfaßt, die auf einer Seite mit einer Argonquelle verbunden ist, in den Reaktor (1) hineinreicht und in der Nähe des Bereichs endet, in dem die Reaktion zwischen den Ausgangsprodukten und dem fluorierenden Mittel stattfindet, und daß ihr eine Einrichtung (11) zur Argonaktivierung zugeordnet ist.

8. Vorrichtung nach Anspruch 6 oder 7, dadurch gekennzeichnet, daß die Aktivierungseinrichtungen (8, 11) in einem Teil der jeweiligen Leitung (7, 10) angeordnet sind, der im Reaktor und nahe den Leitungsenden liegt.

9. Vorrichtung nach einem der Ansprüche 6 bis 8, dadurch gekennzeichnet, daß der poröse Zr-Körper ein Bett aus Zr-Pulver, eine den Schmelztiegel umgebende Hülse aus Zr-Schwamm oder eine Scheibe aus Zr-Schwamm, die im Schmelztiegel nahe der Oberfläche des in der Entstehung befindlichen Glases angeordnet ist, ist.

10. Vorrichtung nach einem der Ansprüche 6 bis 9, dadurch gekennzeichnet, daß dem porösem Zr-Körper eine eigene Heizung zugeordnet ist.

## Revendications

1. Méthode pour la fabrication de verres fluorés, comprenant une phase de fluoration et de purification des produits de départ au moyen d'une réaction de ceux-ci avec NF₃, suivie par une phase de fusion de ces produits pour former le verre, caractérisé en ce que, au moins pendant la phase de fluoration et de purification, on introduit de l'azote activé dans l'atmosphère de la zone où se produit ladite reaction avec NF₃ et on le fait réagir avec les oxydes d'azote dégagés pendant cette réaction pour éliminer ces oxydes, et en ce que dans cette zone de réaction on dispose un élément poreux en Zr pour adsorber l'O₂ dégagé pendant les réactions entre les oxydes d'azote et l'azote activé et pendant les réactions de fluoration et de purification.

2. Méthode selon la revendication 1, caractérisée en ce que ledit courant d'azote activé est maintenu même au cours de la phase de fusion.

3. Méthode selon la revendication 1 et 2, caractérisée en ce que de l'argon activé est aussi introduit dans la zone de réaction.

4. Méthode selon l'une quelconque des revendications précédentes, caractérisée en ce que l'activation de l'azote et de l'argon est obtenue au moyen de décharge électrique entre des électrodes, de décharge à haute fréquence ou d'induction.

5. Méthode selon l'une quelconque des revendications 1 à 4, caractérisée en ce que l'activation de l'azote et de l'argon est effectuée dans une zone proche de la zone de réaction.

6. Appareil pour la fabrication de verres fluorés en utilisant NF₃ comme agent fluorant, comprenant un réacteur (1, 4) avec un creuset (2) destiné à contenir les produits de départ (3) et un conduit (5) pour amener en proximité de ces produits l'agent fluorant, caractérisé en ce qu'il comprend en outre un conduit (7) qui est relié à un bout à une source d'azote et qui: pénètre à l'intérieur du réacteur (1), aboutit en proximité de la zone de réaction entre les produits de départ et l'agent fluorant, en proximité de l'embouchure du creuset (2), et est associé à des moyens (8) pour activer l'azote; et un élément poreux (9) en Zr placé en proximité de ladite zone de réaction pour adsorber l'oxygène dégagé pendant les réactions entre les produits de départ et NF₃ et entre l'azote activé et les oxydes d'azote.

7. Appareil selon la revendication 6, caractérisé en ce qu'il comprend en outre un conduit (10) qui: est relié à un bout à une source d'argon; pénètre à l'intérieur du réacteur (1) et aboutit en proximité de la zone de réaction entre les produits de départ et l'agent fluorant; et est associé à des moyens (11) pour activer l'argon.

8. Appareil selon la revendication 6 ou 7, caractérisé en ce que les moyens d'activation (8, 11) sont placés dans une partie du conduit respectif (7, 10) interne au réacteur et proche de l'extrémité du conduit.

9. Appareil selon l'une quelconque des revendications 6 à 8, caractérisé en ce que l'élément poreux de Zr est un lit de Zr en poudre, un manchon en mousse de Zr qui entoure le creuset ou un disque en mousse de Zr placé dans le creuset, en proximité de la surface du verre en formation.

10. Appareil selon l'une quelconque des revendications 6 à 9, caractérisé en ce que l'élément poreux de Zr est associé à propres moyens de chauffage.
